# EUROPÄISCHE PATENTSCHRIFT

(11) **EP 0 811 452 B1**
(45) Veröffentlichungstag und Bekanntmachung des Hinweises auf die Patenterteilung: **27.02.2002**
(21) Anmeldenummer: 97108966.9
(22) Anmeldetag: 04.06.1997
(51) Int. Cl.: B23K 11/31

(54) **Schweissvorrichtung**
Welding device
Dispositif de soudage

(30) Priorität: 07.06.1996 DE 19622950
(43) Veröffentlichungstag der Anmeldung: 10.12.1997
(73) Patentinhaber: Volkswagen Aktiengesellschaft, 38436 Wolfsburg (DE)
(72) Erfinder: Strich, Harald, 38350 Helmstedt (DE); Rosam, Reiner, 38477 Jembke (DE); Stephan, Rudi, 38442 Wolfsburg (DE)

(56) Entgegenhaltungen:
- WO-A-93/19884
- DE-A- 2 834 835
- DE-A- 3 133 247
- DE-A- 3 522 015
- DE-A- 4 008 088
- DE-C- 4 117 552
- DE-U- 8 915 408
- GB-A- 2 083 771

## Beschreibung

Die Erfindung betrifft eine Schweißvorrichtung mit zwei Schweißelektroden tragenden Elektrodenarmen, gemäß dem Oberbegriff des Anspruchs 1, deren Gattung aus der DE-A-40 08 088 bekannt ist.

Für die Güte und Qualität von Schweißverbindungen, sowie für die Zuverlässigkeit und Standzeit einer entsprechenden Schweißvorrichtung ist es von großer Bedeutung, daß zwei dem Schweißpunkt jeweils gegenüberliegende Schweißelektroden der Schweißvorrichtung keine ungleichmäßigen Kräfte auf das zu schweißende Teil ausüben. Schweißarbeiten müssen jedoch in unterschiedlichsten Lagen der Schweißvorrichtung ausgeführt werden und Gewichtskräfte der Schweißvorrichtung führen zu einer erhöhten Auflagekraft einer der Schweißelektroden auf dem zu schweißenden Teil.

Zum Ausgleich dieser Gewichtskräfte ist es beispielsweise aus der DE-OS 31 33 247 bekannt, Druckfedem zu verwenden, auf denen die Schweißvorrichtung gelagert ist. Derartige Federanordnungen haben jedoch den Nachteil, daß die Kompensation nur schwer einstellbar ist und nur für kleine Auslenkungswinkel bzw. Schräglagen der Schweißvorrichtung bis etwa 15 Grad eine zuverlässige Kompensation gewährleistet. Außerdem besteht die Gefahr, daß eine Elektrode am zu schweißenden Teil hängen bleibt.

Aus der DE-A-40 08 088 ist ferner eine Schweißvorrichtung mit X-förmiger Schweißzangenanordnung bekannt, bei der eine Kraftausgleichsvorrichtung an jeweiligen Schwenkhebeln von Schweißelektroden tragenden Elektrodenarmen angreift und zum Ausgleich von Gewichtseinflüssen auf die genaue Lage der Elektroden entsprechende kompensierende Gegenkräfte aufbringt.

Diese Anordnung hat den Nachteil, daß eine aufwendige Konstruktion mit zusätzlicher Feder oder Druckluftversorgung erforderlich ist. Ferner ist die Ausgleichsvorrichtung an den Schwenkhebeln der Elektrodenarme derart angeordnet, daß sie den Schwenkwinkel der Elektrodenarme zueinander beeinflußt. Dies hat zur Folge, daß während des Schweißvorgangs beim Kompensieren von Gewichstkräften durch die Ausgleichsvorrichtung die Elektrodenarme zueinander aus der Schweißposition etwas ausgelenkt werden, so daß die Schweißelektroden nicht mehr genau fluchtend zueinander ausgerichtet sind. Die Folge sind mangelhafte Schweißpunkte und ungleichmäßiges Abnutzen der Schweißelektroden.

Die DE 41 17 552 C2 offenbart einen Werkzeugträger für eine Punktschweißzange, wobei der Werkzeugträger zum Ausgleich von Lage- bzw. Bemessungstoleranzen eines zu bearbeitenden Werkstückes über eine Parallelführung in einer Bewegungsrichtung verschiebbar ist. Hierbei ist eine in eine Richtung wirkende Gewichts-Kompensiervorrichtung vorgesehen, durch die die in Richtung der Parallelführung wirkende Komponente der Gewichtskraft des Werkzeugträgers ausgeglichen wird. Diese Vorrichtung arbeitet mit einer Vielzahl von hydraulischen Zylindern und ist daher aufwendig, kostenintensiv und reparaturanfällig.

Der vorliegenden Erfindung liegt daher die Aufgabe zugrunde, eine Schweißvorrichtung der obengenannten Art zur Verfügung zu stellen, bei der mit geringem Aufwand eine Kompensation von Kräften, die durch das Gewicht der Schweißzangenanordnung entstehen, sicher zu stellen, wobei der Winkel der Schweißelektroden zueinander und bezüglich des Werkstückes unverändert bleibt.

Diese Aufgabe wird erfindungsgemäß durch eine Schweißvorrichtung der obengenannten Art mit den kennzeichnenden Merkmalen des Anspruchs 1 gelöst.

Dies hat den Vorteil, daß eine Gewichtskraftkompensation in beliebigen Lagen der Schweißvorrichtung bei gleichzeitigem und gleichmäßigem Einfluß auf beide Schweißelektroden mit einer einzigen, einfachen und funktionssicheren Anordnung ohne separates Druckluftsystem erzielt wird.

Ein an einer Kolbenstange des Kolbens der Ausgleichsvorrichtung vorgesehenes Ausgleichselement erlaubt in besonders vorteilhafter Weise eine genaue Justierung der Ausgleichsvorrichtung an unterschiedliche Betriebsbedingungen.

Besonders hervorzuheben ist der Vorteil eines aktiven Lösens der Schweißelektroden von dem Werkstück nach dem Schweißen, indem die Ausgleichsvorrichtung beim Öffnen der Schweißelektroden wieder zurückfährt.

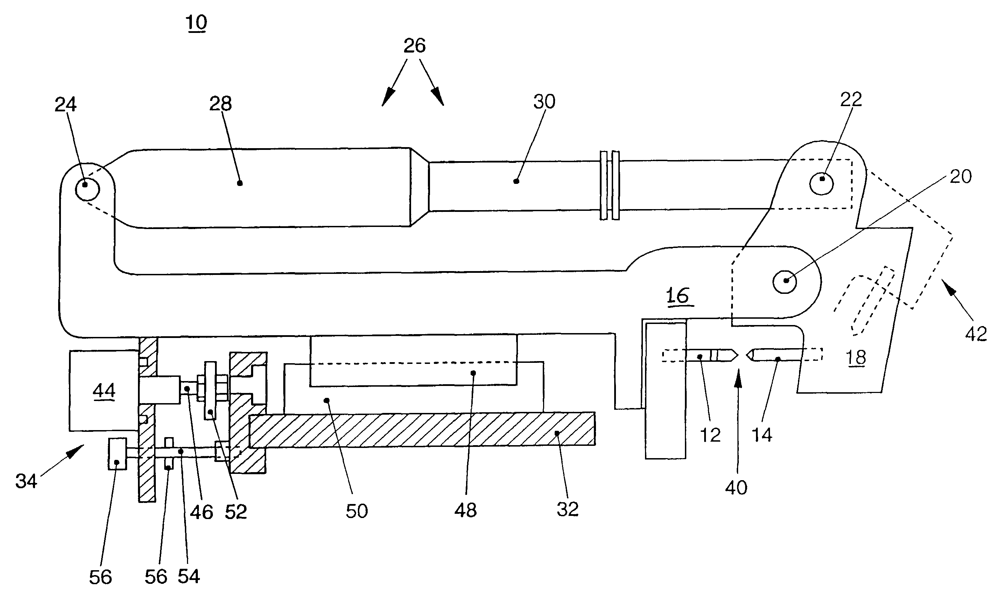

Weitere Merkmale, Vorteile und vorteilhafte Ausgestaltungen der Erfindung ergeben sich aus den abhängigen Ansprüchen, sowie aus der nachstehenden Beschreibung einer Ausführungsform der Erfindung an Hand der beigefügten Zeichnung. Diese zeigt in Schnittansicht eine Schweißvorrichtung mit erfindungsgemäßer Ausgleichsvorrichtung.

Wie in der Figur dargestellt, umfaßt die Schweißvorrichtung 10 zwei Elektrodenarme 16, 18, die jeweils eine Schweißelektrode 12, 14 tragen. Die Elektrodenarme 16, 18 sind an einem Drehpunkt 20 gemeinsam drehbar gelagert und eine Spreizvorrichtung 26 verbindet die den Schweißelektroden 12, 14 abgewandten Enden der Elektrodenarme 16, 18 jeweils an Drehpunkten 22, 24. Bei Betätigung der Spreizvorrichtung 26 drehen sich die Elektrodenarme 16, 18 gegeneinander um die Drehachse 20.

Mit 40 ist die Schweißstellung der Elektrodenarme 16, 18 bzw. der Schweißelektroden 12, 14 bezeichnet. Bezugsziffer 42 bezeichnet die mit gestrichelten Linien angedeutete offene Stellung der Schweißelektroden 12, 14.

An dem Elektrodenarm 16 ist ein Führungswagen 48 befestigt. Dieser sitzt auf einer Führungsschiene 50 auf, die wiederum an einer Halterung 32 befestigt ist. Femer ist am Elektrodenarm 16 eine Zylinder 44 befestigt, dessen Kolbenstange 46 sich an der Halterung 32 abstützt. Beide Anordnungen können einzeln oder gemeinsam umgekehrt angeordnet sein.

Bei Betätigung der Kolben-Zylinder-Anordnung 44, 46 verschiebt sich die gesamte Schweißvorrichtung 10 axial zu den in Schließstellung 40 befindlichen Elektroden 12, 14. Auf einer zusätzlichen Führungsschiene 54 angebrachte Anschläge 56 begrenzen den Verfahrweg der Schweißvorrichtung auf der Führungsschiene 50. Zusätzlich erlaubt ein Ausgleichselement 52 eine genaue Justierung der Ausgleichsvorrichtung 34.

Durch das Verschieben der Schweißvorrichtung 10 in axialer Richtung zu den in Schweißstellung 40 befindlichen Elektroden 12, 14 können Gewichtskräfte der Schweißvorrichtung 10 ausgeglichen werden, die ohne Ausgleich zu einer ungleichmäßigen Krafteinwirkung der Elektroden 12, 14 auf einen Schweißpunkt führen. Beispielsweise könnte die Elektrode 14 mit erhöhter Kraft auf einem Schweißpunkt aufliegen. Dies würde zu einem qualitativ minderwertigen Schweißpunkt und möglicherweise zur Beschädigung der Schweißelektroden führen.

Zum Ausgleich verfährt die Ausgleichsvorrichtung in dem gewählten Beispiel die Schweißvorrichtung 10 in der Darstellung in der Figur nach rechts, so daß die Krafteinwirkung der Elektrode 14 vermindert bzw. beseitigt ist.

Erfindungsgemäß ist eine Druckluft betätigte Kolben-Zylinder-Anordnung sowohl für die Spreizvorrichtung 26, als auch für die Ausgleichsvorrichtung 34, die beide von derselben Druckluftquelle gespeist werden, so daß keine zusätzlichen Einrichtungen für die Betätigung der Ausgleichsvorrichtung erforderlich sind.

Die Schweißvorrichtung 10 kann eine stationäre Schweißzange sein. Je nach Lage der stationär befestigten Schweißvorrichtung 10 wird dann die Ausgleichsvorrichtung 34 durch Einstellen des Druckes der Druckluft entsprechend eingestellt. In der offenen Stellung 42 der Elektroden 12, 14 wird das zu schweißende teil zugeführt.

Die Halterung 32 kann jedoch auch ein Roboterarm sein, der die Schweißzange dem zu schweißenden Teil in der offenen Stellung 42 zuführt bzw. am Schweißpunkt positioniert. Für verschiedene Stellungen des Roboterarms treten unterschiedlich wirkende Gewichtskräfte der Schweißvorrichtung 10 auf, die unabhängig von der Lage der Schweißvorrichtung 10 durch die Ausgleichsvorrichtung 34 durch Einstellen des Druckes der Druckluft kompensiert werden können.

### BEZUGSZEICHENLISTE

- 10: Schweißvorrichtung
- 12,14: Schweißelektroden
- 16,18: erster/zweiter Elektrodenarm
- 20: gemeinsamer Drehpunkt der Elektrodenarme
- 22: Drehpunkt des zweiten Elektrodenarms
- 24: Drehpunkt des Schließzylinders
- 26: Spreizvorrichtung
- 28: Zylinder der Spreizvorrichtung
- 30: Kolbenstange der Spreizvorrichtung
- 32: Halterung
- 34: Ausgleichsvorrichtung
- 40: Schweißstellung der Schweißelektroden
- 42: offen Stellung der Schweißelektroden
- 44: Zylinder der Ausgleichsvorrichtung
- 46: Kolben der Ausgleichsvorrichtung
- 48: Führungswagen
- 50: Führungsschiene
- 52: Ausgleichselement
- 54: Führungsschiene
- 56: Anschläge

## Patentansprüche

1. Schweißvorrichtung (10) mit zwei Schweißelektroden (12,14) tragenden Elektrodenarmen (16,18), insbesondere zur Fertigung von Karosserieteilen von Kraftfahrzeugen, wobei die Schweißelektroden (12, 14) in ihrer Geschlossenstellung eine Schweißposition (40) zwischen sich einschließen, einer Spreizvorrichtung (26), mittels der die Elektrodenarme (16, 18) gegeneinander verstellbar sind, die Schweißvorrichtung (10) an einer Halterung (32) befestigt ist, wobei die Elektrodenarme (16, 18) an einem Drehpunkt (20) gemeinsam gelagert sind und die Spreizvorrichtung (26) die den Schweißelektroden (12, 14) abgewandten Enden der Elektrodenarme (16, 18) jeweils an Drehpunkten (22, 24) verbindet,
**dadurch gekennzeichnet, daß** ferner die Schweißvorrichtung (10) eine Ausgleichsvorrichtung (34) aufweist, die die Schweißvorrichtung (10) gegenüber der Halterung (32) verschiebt,
daß sowohl Ausgleichsvorrichtung (34) als auch die Spreizvorrichtung (26) druckluftbetätigte Kolben-Zylinder-Anordnungen (44,46 bzw. 28,30) sind,
daß eine Druckluftquelle vorgesehen ist, die sowohl die Ausgleichsvorrichtung (34) als auch die Spreizvorrichtung (26) mit Druckluft speist,
daß die axiale Verschiebung einstellbar ist durch Wahl des Druckes der Druckluft für die Kolben-Zylinder-Anordnung (44, 46) der Ausgleichsvorrichtung (34).

2. Schweißvorrichtung (10) nach wenigstens einem der vorstehenden Ansprüche,
**dadurch gekennzeichnet, daß**
die Halterung (32) stationär ist.

3. Schweißvorrichtung (10) nach wenigstens einem der Ansprüche 1 bis 4,
**dadurch gekennzeichnet, daß**
die Halterung (32) ein Roboterarm ist.

4. Schweißvorrichtung (10) nach wenigstens einem der vorstehenden Ansprüche,
**dadurch gekennzeichnet, daß**
die Schweißvorrichtung (10) an einem ersten Elektrodenarm (16) einen Führungswagen (48) aufweist, der sich axial zur Schweißelektrode (12) dieses Elektrodenarms (16) erstreckt, und der auf einer entsprechenden Führungsschiene (50) der Halterung (32) aufliegt.

5. Schweißvorrichtung (10) nach Anspruch 4,
**dadurch gekennzeichnet, daß**
der Zylinder (44) der Ausgleichsvorrichtung (34) an dem ersten Elektrodenarm (16) befestigt ist, und der Kolben (46) der Ausgleichsvorrichtung (34) mit der Führungsschiene (50) und/oder der Halterung (32) fest verbunden ist.

6. Schweißvorrichtung (10) nach Anspruch 4 oder 5,
**dadurch gekennzeichnet, daß**
an einer Kolbenstange (46) des Kolbens der Ausgleichsvorrichtung (34) ein Ausgleichselement (52) vorgesehen ist.

7. Schweißvorrichtung (10) nach wenigstens einem der vorstehenden Ansprüche,
**dadurch gekennzeichnet, daß**
die axiale Verschiebung bei jedem Ansetzten bzw. Schließen der Schweißelektroden (12, 14) erfolgt.

8. Schweißvorrichtung (10) nach wenigstens einem der vorstehenden Ansprüche,
**dadurch gekennzeichnet, daß**
die Ausgleichsvorrichtung (34) die Schweißvorrichtung (10) nach dem Schweißvorgang bzw. Öffnen der Schweißelektroden (12, 14) zurückschiebt.

9. Schweißvorrichtung (10) nach wenigstens einem der vorstehenden Ansprüche,
**dadurch gekennzeichnet, daß**
die Ausgleichsvorrichtung (34) die Schweißvorrichtung (10) axial zu den Schweißelektroden (12, 14) bezogen auf deren Schweißposition (40) verschiebt.

10. Schweißvorrichtung (10) nach wenigstens einem der vorstehenden Ansprüche,
**dadurch gekennzeichnet, daß**
die Ausgleichsvorrichtung (34) die Schweißvorrichtung (10) derart verschiebt, daß der Winkel der Schweißelektroden (12, 14) bezogen auf deren Schweißposition (40, bezüglich eines zu schweißenden Werkstückes im wesentlichen unverändert bleibt.

## Claims

1. Welding device (10) having two electrode arms (16, 18) which bear two welding electrodes (12, 14), in particular for the production of body parts of motor vehicles, the welding electrodes (12, 14), in their closed position, enclosing a welding position (40) between them, having a spreading device (26), by means of which the electrode arms (16, 18) can be adjusted with respect to one another, and the welding device (10) being secured on a mount (32), the electrode arms (16, 18) being jointly mounted on a rotation point (20), and the spreading device (26) connecting the ends of the electrode arms (16, 18) which are remote from the welding electrodes (12, 14) in each case at rotation points (22, 24), **characterized in that** the welding device (10) also has a compensating device (34) which displaces the welding device (10) with respect to the mount (32), **in that** both the compensating device (34) and the spreading device (26) are piston-cylinder arrangements (44, 46 and 28, 30) which are actuated by compressed air, **in that** a compressed-air source is provided, which feeds both the compensating device (34) and the spreading device (26) with compressed air, **in that** the axial displacement can be set by selecting the pressure of the compressed air for the piston-cylinder arrangement (44, 46) of the compensating device (34).

2. Welding device (10) according to at least one of the preceding claims, **characterized in that** the mount (32) is stationary.

3. Welding device (10) according to at least one of Claims 1 to 2, **characterized in that** the mount (32) is a robot arm.

4. Welding device (10) according to at least one of the preceding claims, **characterized in that** the welding device (10), on a first electrode arm (16), has a guide carriage (48), which extends axially with respect to the welding electrode (12) of this electrode arm (16) and which rests on a corresponding guide rail (50) of the mount (32).

5. Welding device (10) according to Claim 4, **characterized in that** the cylinder (44) of the compensating device (34) is attached to the first electrode arm (16), and the piston (46) of the compensating device (34) is fixedly connected to the guide rail (50) and/or the mount (32).

6. Welding device (10) according to Claim 4 or 5, **characterized in that** a compensating element (52) is provided on a piston rod (46) of the piston of the compensating device (34).

7. Welding device (10) according to at least one of the preceding claims, **characterized in that** the axial displacement takes place each time the welding electrodes (12, 14) are fitted or closed.

8. Welding device (10) according to at least one of the preceding claims, **characterized in that** the compensating device (34) moves the welding device (10) back after the welding operation or opening of the welding electrodes (12, 14).

9. Welding device (10) according to at least one of the preceding claims, **characterized in that** the compensating device (34) displaces the welding device (10) axially with respect to the welding electrodes (12, 14), based on their welding position (40).

10. Welding device (10) according to at least one of the preceding claims, **characterized in that** the compensating device (34) displaces the welding device (10) in such a manner that the angle of the welding electrodes (12, 14) based on their welding position (40) remains substantially unchanged with respect to a workpiece which is to be welded.

## Revendications

1. Dispositif de soudage (10) avec deux bras d'électrodes (16, 18) portant des électrodes de soudage (12, 14), en particulier pour la fabrication de pièces de carrosserie de véhicules automobiles, dans lequel les électrodes de soudage (12, 14) définissent entre elles, dans leur position fermée, une position de soudage (40), avec un dispositif d'écartement (26), au moyen duquel les bras d'électrodes (16, 18) peuvent être déplacés l'un par rapport à l'autre et le dispositif de soudage (10) est fixé à un support (32), dans lequel les bras d'électrodes (16, 18) sont supportés ensemble en un centre de rotation (20) et le dispositif d'écartement (26) relie les extrémités des bras d'électrodes (16, 18) situées à l'opposé des électrodes de soudage (12, 14) respectivement à des centres de rotation (22, 24), **caractérisé en ce que** le dispositif de soudage (10) présente en outre un dispositif de compensation (34) qui déplace le dispositif de soudage (10) par rapport au support (32), **en ce qu'**aussi bien le dispositif de compensation (34) que le dispositif d'écartement (26) sont des dispositifs à piston-cylindre (44, 46, respectivement 28, 30) actionnés à l'air comprimé, **en ce qu'**il est prévu une source d'air comprimé, qui alimente aussi bien le dispositif de compensation (34) que le dispositif d'écartement (26) en air comprimé, et **en ce que** le déplacement axial est réglable par le choix de la pression de l'air comprimé pour le dispositif à piston-cylindre (44, 46) du dispositif de compensation (34).

2. Dispositif de soudage (10) selon la revendication 1, **caractérisé en ce que** le support (32) est immobile.

3. Dispositif de soudage (10) selon au moins une des revendications 1 et 2, **caractérisé en ce que** le support (32) est un bras de robot.

4. Dispositif de soudage (10) selon au moins une des revendications précédentes, **caractérisé en ce que** le dispositif de soudage (10) présente sur un premier bras d'électrode (16) un chariot de guidage (48), qui s'étend axialement par rapport à l'électrode de soudage (12) de ce bras d'électrode (16), et qui repose sur un rail de guidage correspondant (50) du support (32).

5. Dispositif de soudage (10) selon la revendication 4, **caractérisé en ce que** le cylindre (44) du dispositif de compensation (34) est fixé au premier bras d'électrode (16), et le piston (46) du dispositif de compensation (34) est attaché au rail de guidage (50) et/ou au support (32).

6. Dispositif de soudage (10) selon la revendication 4 ou 5, **caractérisé en ce qu'**il est prévu un élément de compensation (52) sur une tige de piston (46) du piston du dispositif de compensation (34).

7. Dispositif de soudage (10) selon au moins une des revendications précédentes, **caractérisé en ce que** le déplacement axial se produit lors de chaque jonction, respectivement fermeture des électrodes de soudage (12, 14).

8. Dispositif de soudage (10) selon au moins une des revendications précédentes, **caractérisé en ce que** le dispositif de compensation (34) retire le dispositif de soudage (10) après l'opération de soudage, respectivement l'ouverture des électrodes de soudage (12, 14).

9. Dispositif de soudage (10) selon au moins une des revendications précédentes, **caractérisé en ce que** le dispositif de compensation (34) déplace le dispositif de soudage (10) en direction axiale par rapport aux électrodes de soudage (12, 14), par rapport à leur position de soudage (40).

10. Dispositif de soudage (10) selon au moins une des revendications précédentes, **caractérisé en ce que** le dispositif de compensation (34) déplace le dispositif de soudage (10) d'une manière telle que l'angle des électrodes de soudage (12, 14), rapporté à leur position de soudage (40), par rapport à une pièce à souder reste sensiblement inchangé.
